# FASCICULE DE BREVET EUROPEEN

(11) **EP 4 185 520 B1**
(45) Date de publication et mention de la délivrance du brevet: **08.05.2024**
(21) Numéro de dépôt: 21755005.2
(22) Date de dépôt: 15.07.2021
(51) Int. Cl.: B64C 11/06, F04D 29/32, F04D 29/64

(54) **SYSTÈME DE COMMANDE DU CALAGE ANGULAIRE D'UNE AUBE D'HELICE POUR UNE TURBOMACHINE D'AERONEF**
SYSTEM ZUR STEUERUNG DER NEIGUNG EINER PROPELLERSCHAUFEL FÜR EIN FLUGZEUGTURBINENTRIEBWERK
SYSTEM FOR CONTROLLING THE PITCH OF A PROPELLER BLADE FOR AN AIRCRAFT TURBINE ENGINE

(30) Priorité: 24.07.2020 FR 2007809; 24.07.2020 FR 2007812; 15.03.2021 FR 2102547
(43) Date de publication de la demande: 31.05.2023
(73) Titulaire: SAFRAN AIRCRAFT ENGINES, 75015 Paris (FR)
(72) Inventeur: COTTET, Clément, 77550 MOISSY-CRAMAYEL (FR); COURTIER, Vivien Mickaël, 77550 MOISSY-CRAMAYEL (FR); JOUDON, Vincent, 77550 MOISSY-CRAMAYEL (FR); SERVANT, Régis Eugène Henri, 77550 MOISSY-CRAMAYEL (FR)
(74) Mandataire: Gevers & Orès
(86) Numéro de dépôt international: PCT/FR2021/051311
(87) Numéro de publication internationale: WO 2022/018354

(56) Documents cités:
- CH-A- 194 634
- DE-A1- 4 315 080
- GB-A- 240 291
- US-A- 1 573 000
- US-A- 2 017 505

## Description

### Domaine technique de l'invention

La présente invention concerne le domaine des turbomachines d'aéronef et en particulier des hélices propulsives de ces turbomachines qui comportent des aubes à calage variable.

### Arrière-plan technique

L'état de l'art comprend notamment les documents DE-A1-43,15,080, FR-A1-3017163, US-A1-1 573 000, US-A-2 017 505, et FR-A1-3 080 322.

Une hélice de turbomachine d'aéronef peut être carénée, comme c'est le cas d'une soufflante par exemple, ou non carénée comme c'est le cas d'une architecture du type open-rotor par exemple.

Une hélice comprend des aubes qui peuvent être à calage variable. La turbomachine comprend alors un mécanisme permettant de modifier l'angle de calage des aubes afin d'adapter la poussée générée par l'hélice en fonction des différentes phases de vol.

La conception d'une aube d'hélice met en jeu plusieurs disciplines dont les objectifs sont généralement antagonistes. Elle doit permettre des performances aérodynamiques optimales (c'est-à-dire fournir une poussée en maximisant le rendement), garantir une tenue mécanique de l'aube (c'est-à-dire tenir les contraintes mécaniques résultant des chargements statiques et dynamiques) tout en limitant la masse ainsi que la signature acoustique. En particulier, l'amélioration des performances aérodynamiques de l'hélice tend vers une augmentation du BPR (*By Pass Ratio*), ce qui se traduit par une augmentation de son diamètre externe et donc de l'envergure des aubes. Or l'augmentation du BPR va de pair avec la réduction du FPF (*Fan Pressure Ratio*). Par conséquent, un système de changement de pas (aube à calage variable) est généralement requis pour que l'hélice soit opérable sur tout le domaine de vol.

Il existe plusieurs technologies d'attache d'une aube d'hélice à calage variable et plusieurs technologies de commande du calage angulaire d'une aube d'hélice de ce type. Cependant, ces technologies sont relativement complexes et coûteuses. Par ailleurs, en cas de problème et en particulier de casse, elles ne garantissent pas la rétention des aubes radialement vers l'extérieur par rapport à l'axe de rotation de l'hélice, en particulier lorsque cette hélice n'est pas carénée.

En cas de rupture ou de défaillance des moyens de rétention d'une aube de l'hélice, il est en effet particulièrement important d'assurer la retenue de cette aube afin d'éviter qu'elle soit projetée vers l'extérieur et qu'elle impacte le fuselage de l'aéronef équipé de la turbomachine. Cette fonction de sécurité, appelée « *failsafe »,* n'est pas toujours présente dans les systèmes de commande des technologies actuelles. Les systèmes de commande qui comprennent cette fonction comprennent en général des éléments qui sont eux-mêmes susceptibles de se détacher et d'impacter le fuselage de l'aéronef. Plus la taille et la densité de ces éléments sont importantes, et plus les risques de dégâts sur le fuselage sont importants et peuvent nécessiter un blindage spécifique, ce qui est impacte la masse de l'aéronef et donc ses performances.

Il existe donc un besoin d'une technologie de système de commande qui intègre une fonction de sécurité simple et efficace.

### Résumé de l'invention

L'invention concerne un système de commande du calage angulaire d'une aube d'hélice, pour une turbomachine d'aéronef, caractérisé en ce qu'il comprend :
- un bol comportant une paroi annulaire s'étendant autour d'un axe destiné à être un axe de calage de l'aube, cette paroi annulaire comportant une extrémité axiale inférieure fermée par une paroi de fond, et une extrémité axiale supérieure ouverte et configurée pour autoriser le montage d'un pied de l'aube à l'intérieur du bol, la paroi de fond étant configurée pour coopérer par complémentarité de formes avec une extrémité libre dudit pied de façon à ce que le bol soit solidarisé en rotation avec le pied autour dudit axe, et
- une bague d'immobilisation qui s'étend autour dudit axe et qui est configurée pour être montée autour du pied, cette bague d'immobilisation étant configurée pour être montée à l'intérieur du bol et pour coopérer respectivement avec le pied et la paroi annulaire du bol afin d'assurer la rétention axiale du pied dans le bol,
et en ce que la bague d'immobilisation est une bague à double crabotage qui comporte deux rangées annulaires de dents externes de crabot, une première de ces rangées de dents étant configurée pour coopérer par crabotage avec des premières dents internes de crabot complémentaires de la paroi annulaire du bol et par appui axial avec ces dents pour assurer la rétention du pied dans le bol, et une seconde de ces rangées de dents étant configurée pour coopérer par crabotage avec des secondes dents internes de crabot complémentaires de la paroi annulaire du bol et étant espacée de ces dents par un jeu axial pour assurer une sécurité en cas de défaillance de la première rangée de dents

Dans la présente demande, on entend par une bague à double crabotage une bague qui est équipée de deux rangées annulaires de dents externes de crabot. Chacune de ces rangées de dents est apte à coopérer par crabotage avec une rangée de dents internes complémentaires du bol du système. Le crabotage est un type de montage d'une pièce dans une autre par un double déplacement des pièces par translation puis par rotation, l'une par rapport à l'autre. L'une des pièces est engagée dans l'autre des pièces par translation axiale jusqu'à ce que les dents passent d'une position où elles sont les unes au-dessus des autres à une position ou elles sont les unes au-dessous des autres. Il convient pour cela d'aligner les dents de l'une des pièces avec les espaces inter-dents de l'autre des pièces pour autoriser l'engagement des pièces l'une dans l'autre. Les pièces sont ensuite déplacées en rotation autour de leurs axes et l'une par rapport à l'autre de façon à ce que les dents des pièces soient sensiblement alignées axialement et puissent coopérer par butée axiale les unes avec les autres.

La première rangée de dents de crabot de la bague d'immobilisation a pour fonction d'assurer la retenue axiale du pied dans le bol et coopère pour cela par appui axial avec les dents internes complémentaires du bol.

La seconde rangée de dents de crabot de cette bague a pour fonction d'assurer une sécurité du type « *failsafe »* en cas de défaillance de la première rangée de dents.

Autrement dit, la bague d'immobilisation a une rangée de dents de crabot active ou principale (la première rangée de dents) pour la retenue du pied d'aube et une rangée de dents de crabot passive ou secondaire (la seconde rangée de dents) qui n'est pas opérationnelle en fonctionnement normal mais utilisée en cas de défaillance de la rangée de dents active. Cette redondance assure une sécurité optimale dans la retenue du pied d'aube sans entraîner de modification importante du système et sans ajouter des pièces. La fonction de sécurité ajoutée au système n'entraîne donc pas une modification significative du système et de son encombrement.

Le but de l'invention est ainsi d'introduire un élément de sécurité dans la conception de l'attache du pied d'aube. Cet élément de sécurité consiste non seulement en un chemin d'effort secondaire en attente qui permet la non libération de l'aube en cas de défaillance du système de rétention principal, mais également en une détection de panne par le balourd de la soufflante engendré par la défaillance du système de rétention principal. En effet, lorsqu'il y a défaillance du crabot principal, le jeu précité est consommé et l'aube est retenue par le crabot secondaire. Puisque la position radiale de l'aube change, cela introduit un balourd sur la soufflante qui peut être détecté pour signaler le problème.

Le système selon l'invention peut comprendre une ou plusieurs des caractéristiques suivantes, prises isolément les unes des autres, ou en combinaison les unes avec les autres :
- lequel la première rangée de dents est une rangée de dents supérieure destinée à être située du côté de la pale de l'aube, et la seconde rangée de dents est une rangée de dents inférieure ; la seconde rangée de dents est ainsi destinée à être située du côté du pied de l'aube ;
- la seconde rangée de dents est une rangée de dents supérieure destinée à être située du côté de la pale de l'aube, et la première rangée de dents est une rangée de dents inférieure ; la première rangée de dents est ainsi destinée à être située du côté du pied de l'aube ;
- les première et seconde rangées de dents sont espacées axialement l'une de l'autre d'un espace qui est destiné à accueillir lesdites premières ou secondes dents internes et qui a une dimension axiale supérieure à une épaisseur axiale de ces dents internes.
- les dents de la première rangée de dents ont une épaisseur axiale supérieure à celle des dents de la seconde rangée de dents ;
- les première et seconde rangées de dents ont sensiblement un même diamètre interne et un même diamètre externe ;
- la bague d'immobilisation comprend une surface cylindrique interne à sa périphérie interne, cette surface cylindrique interne étant configurée pour coopérer par glissement avec une surface cylindrique externe complémentaire du pied de l'aube ou d'un élément rapporté sur ce pied lors du double crabotage, et cette surface cylindrique interne étant située à l'intérieur de la première rangée de dents voire également de la seconde rangée de dents ;
- la surface cylindrique interne a une dimension axiale qui est comprise entre 90% et 100% d'une épaisseur axiale des dents de la première rangée de dents ou d'une épaisseur axiale maximale de la bague d'immobilisation ;
- la partie supérieure de la paroi annulaire autour de laquelle est montée le palier supérieur comprend lesdites premières et secondes dents à sa périphérie interne et un filetage à sa périphérie externe, un écrou étant vissé sur ce filetage et prenant appui axialement sur une bague externe de ce palier ;
   -- la bague comprend à sa périphérie interne une surface tronconique au moins en partie complémentaire de la forme du pied ;
   -- la bague est sectorisée et comprend une pluralité de secteurs angulaires disposes les uns à côté des autres autour dudit axe ;
   -- le système comprend en outre :
      - un palier de guidage à roulement inférieur s'étendant autour dudit axe et monté autour d'une partie inférieure de la paroi annulaire ;
      - un palier de guidage à roulement supérieur s'étendant autour dudit axe et monté autour d'une partie supérieure de la paroi annulaire ;
   -- au moins l'un des paliers de guidage a sa bague interne qui est intégrée audit bol ;
   -- au moins l'un des paliers de guidage est à contact oblique ;
   -- l'évidement est excentré par rapport à l'axe de calage ;
   -- le système comprend en outre un organe élastiquement déformable s'étendant autour de l'axe de calage et monté à l'intérieur du bol, cet organe prenant appui axialement sur la paroi de fond et étant configuré pour solliciter axialement le pied de l'aube vers l'extérieur du bol ;
   -- le système comprend en outre un anneau de verrouillage et un jonc annulaire, l'anneau de verrouillage étant configuré pour être engagé axialement entre les dents internes et externes de crabot pour empêcher la rotation de la bague de crabotage à l'intérieur du bol, et le jonc annulaire étant monté dans le bol pour bloquer axialement l'anneau de verrouillage dans le bol ;
   -- le fût est réalisé en deux demi-coques rapportées et fixées sur le corps, les demi-coques étant jointes au niveau d'un plan de joint qui passe par ledit axe de calage ;
   -- le fût est collé sur le corps ;
   -- au moins une bague de frettage est montée autour des demi-coques pour les maintenir serrées contre le corps, cette bague de frettage s'étendant autour de l'axe de calage ;
   -- une bague de frettage inférieure est montée sur une surface cylindrique basse du fût, et s'étend autour d'au moins une partie de l'extrémité libre du corps ;
   -- une bague de frettage supérieure est montée sur une surface cylindrique haute du fût, et s'étend autour d'une partie d'un bulbe du corps ;
   -- la bague de crabotage est configurée pour être montée sur la surface cylindrique haute du fût ;
   -- le premier palier de guidage s'étend au moins en partie autour de la bague de frettage inférieure, et le second palier de guidage s'étend au moins en partie autour de la bague de frettage supérieure.

Les paliers de guidage assurent la reprise des actions mécaniques issues des efforts aérodynamiques et centrifuges s'appliquant sur l'aube en fonctionnement. Le palier inférieur peut être configuré pour assurer la rétention de l'aube au centrifuge et le palier supérieur peut être configuré pour assurer la reprise des moments de flexion issus des efforts aérodynamiques et centrifuges. La distance entre les paliers, le long de l'axe de calage, génère un bras de levier suffisant pour empêcher l'aube de rotuler, quelle que soit la phase de vol.

La présente invention concerne également un ensemble comportant un système tel que décrit ci-dessus et une aube d'hélice à calage variable, cette aube comportant une pale reliée à un pied, le pied comportant un corps logé dans un fût annulaire qui s'étend autour d'un axe de calage de l'aube. Ledit corps est de préférence plein (c'est-à-dire qu'il est exempt de partie creuse évidée). Avantageusement, ledit corps comprend une extrémité libre située du côté opposé à la pale, cette extrémité libre étant configurée pour coopérer par complémentarité de formes avec le système de commande. Le fût est de préférence indépendant du système de commande.

La présente invention concerne également une turbomachine, en particulier d'aéronef, comportant au moins un système ou un ensemble tel que décrit ci-dessus.

La présente invention concerne enfin un procédé de montage d'un système tel que décrit ci-dessus :
a) insertion du pied de l'aube à l'intérieur du bol du système, par déplacement de l'aube dans une direction parallèle à l'axe de calage,
b) engagement de l'extrémité libre du pied dans l'évidement de la paroi de fond du bol de façon à solidariser en rotation le bol avec le pied de l'aube, et
c) engagement de la bague d'immobilisation, préalablement montée ou présente autour du pied de l'aube, dans le bol et montage de cette bague par double crabotage dans le bol et sur le pied de l'aube de façon à assurer la rétention axiale du pied dans le bol.

Avantageusement, pendant les étapes a) et/ou b), le pied de l'aube prend appui sur l'organe élastiquement déformable et le comprime axialement.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en perspective d'une aube d'hélice pour une turbomachine d'aéronef,

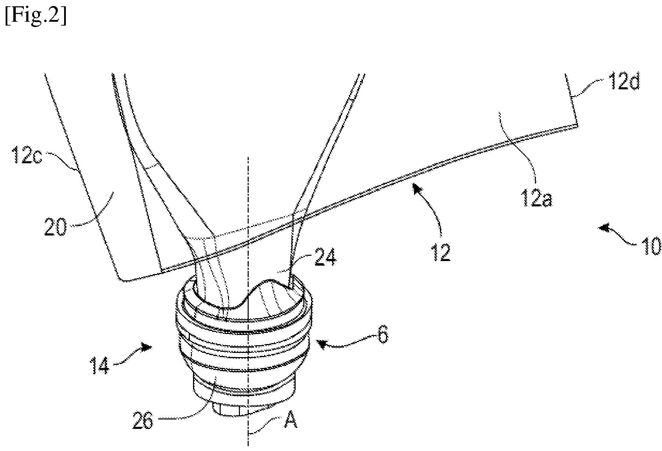

[Fig.2] la figure 2 est une vue à plus grande échelle d'une partie de la figure 1 et montre le pied de l'aube,
[Fig.3] la figure 3 est une vue schématique en perspective et avec éclaté partiel du pied de l'aube de la figure 1,
[Fig.4] la figure 4 est une vue schématique en perspective du corps du pied de l'aube de la figure 1,
[Fig.5] la figure 5 est une autre vue schématique en coupe axiale du pied de l'aube de la figure 1 et de paliers de guidage, le plan de coupe s'étendant le long d'une corde de la pale de l'aube,
[Fig.6] la figure 6 est une vue schématique en coupe axiale du pied de l'aube de la figure 1 et des paliers de guidage, le plan de coupe s'étendant transversalement à la corde de la pale de l'aube,
[Fig.7] la figure 7 est une autre vue schématique en coupe selon la ligne VII-VII de la figure 5,
[Fig.8] la figure 8 est une vue schématique en coupe axiale du pied de l'aube de la figure 1 et d'un système de commande du calage angulaire de cette aube,
[Fig.9] la figure 9 est une vue schématique en perspective d'un bol du système de la figure 8,
[Fig.10] la figure 10 est une vue schématique en perspective d'une bague de crabotage du système de la figure 8,
[Fig.11] la figure 11 est une vue schématique en perspective d'un anneau de verrouillage du système de la figure 8,
[Fig.12] la figure 12 est une vue schématique en perspective et en coupe axiale partielle du pied de l'aube et du système de la figure 8, et montre une première étape de montage,
[Fig.13] la figure 13 est une vue schématique en perspective et en coupe axiale partielle du pied de l'aube et du système de la figure 8, et montre une deuxième étape de montage,
[Fig.14] la figure 14 est une vue schématique en perspective et en coupe axiale partielle du pied de l'aube et du système de la figure 8, et montre une troisième étape de montage,
[Fig.15] la figure 15 est une vue schématique en perspective et en coupe axiale partielle du pied de l'aube et du système de la figure 8, et montre une quatrième étape de montage,
[Fig.16] la figure 16 est une vue schématique en perspective et en coupe axiale partielle du pied de l'aube et du système de la figure 8, et montre une cinquième étape de montage,
[Fig.17] la figure 17 est une vue schématique en perspective et en coupe axiale partielle du pied de l'aube et du système de la figure 8, et montre une sixième étape de montage, et
[Fig.18] la figure 18 est une vue schématique en perspective d'une bague d'immobilisation à double rangée de dents de crabotage pour un système selon l'invention de commande du calage angulaire d'une aube ;
[Fig.19a-19b] les figures 19a et 19b sont des vues très schématiques de cinématiques de montage d'une bague d'immobilisation à double crabotage ;
[Fig.20] la figure 20 est une vue schématique partielle en coupe axiale d'un premier mode de réalisation d'un système selon l'invention ;
[Fig.21] la figure 21 est une vue schématique partielle en coupe axiale d'un second mode de réalisation d'un système selon l'invention ;
[Fig.22] la figure 22 est une vue schématique partielle en coupe axiale d'un troisième mode de réalisation d'un système selon l'invention.

### Description détaillée de l'invention

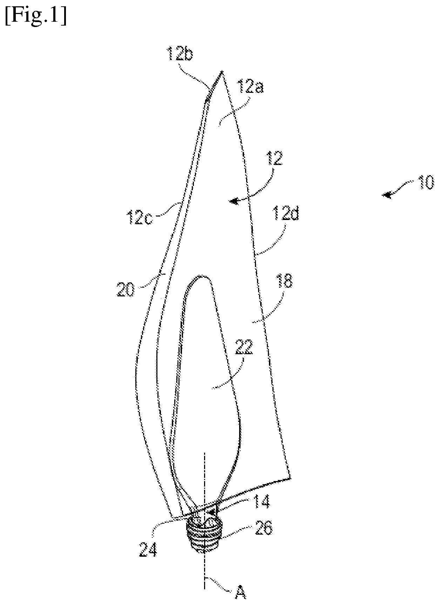

La figure 1 montre une aube 10 pour une hélice d'une turbomachine d'aéronef, cette hélice étant carénée ou non carénée.

L'aube 10 comprend une pale 12 reliée à un pied 14.

La pale 12 a un profil aérodynamique et comprend un intrados 12a et un extrados 12b qui sont reliés par un bord amont d'attaque 12c et par un bord aval de fuite 12d, les termes amont et aval faisant référence à l'écoulement des gaz autour de la pale en fonctionnement.

La pale 12 a une extrémité supérieure qui est libre, appelée sommet, et une extrémité inférieure qui est reliée au pied 14.

Dans l'exemple représenté, l'aube 10 est réalisée en matériau composite par un procédé d'injection appelé procédé RTM (acronyme de l'anglais *Resin Transfer Molding*). Ce procédé consiste à préparer une préforme fibreuse 18 par tissage en trois dimensions puis à disposer cette préforme dans un moule et d'y injecter une résine polymérisable telle qu'une résine époxy, qui va imprégner la préforme. Après polymérisation et durcissement de la pale 12, son bord d'attaque 12c est en général renforcé par un bouclier métallique 20 rapporté et fixé, par exemple par collage.

L'aube 10 comprend ici un longeron 22 qui comprend une partie formant une âme de la pale 12 et qui est destinée à être insérée dans la préforme 18 avant l'injection de résine, et une partie qui s'étend du côté opposé au sommet de la pale 14 pour former une partie du pied 14, appelé corps 24. Le longeron 22 est préférentiellement en matériau composite à matrice organique époxy renforcée par fibres de carbone tissées 3D avec la direction chaîne majoritairement orientée radialement et la trame majoritairement orientée selon la corde de la pale à hauteur de veine aérodynamique. Cependant, le longeron peut également être un assemblage plus avantageux mécaniquement de différents matériaux composites à matrice organique (thermodurcissable, thermoplastique ou élastomère) renforcés par fibres longues (carbone, verre, aramide, polypropylène) selon plusieurs arrangements fibreux (tissé, tressé, tricoté, unidirectionnel).

Bien que cela ne soit pas représenté, la pale 12 peut être creuse ou pleine et comprend une cavité interne remplie avec un matériau de remplissage du type mousse ou nid d'abeille. Ce matériau de remplissage est installé autour du longeron 22 et il est recouvert d'une peau en matériau composite à matrice organique pour augmenter la résistance de la pale à l'impact.

Le bouclier 20 peut être titane ou alliage de titane, inox, acier, aluminium, nickel, etc. L'intrados 12a voire l'extrados 12b de la pale 12 peut être recouvert d'un film polyuréthane pour la protection à l'érosion.

Le pied 14 comprend pour l'essentiel deux parties, à savoir ce corps 24 et un fût annulaire 26 qui s'étend autour du corps 24 et d'un axe A de l'aube.

L'axe A est un axe d'allongement de l'aube 10 et de la pale 12 et en particulier un axe de calage de l'aube, c'est-à-dire l'axe autour duquel la position angulaire de l'aube est ajustée. C'est en général aussi un axe radial qui s'étend donc suivant un rayon par rapport à l'axe de rotation de l'hélice équipée de cette aube.

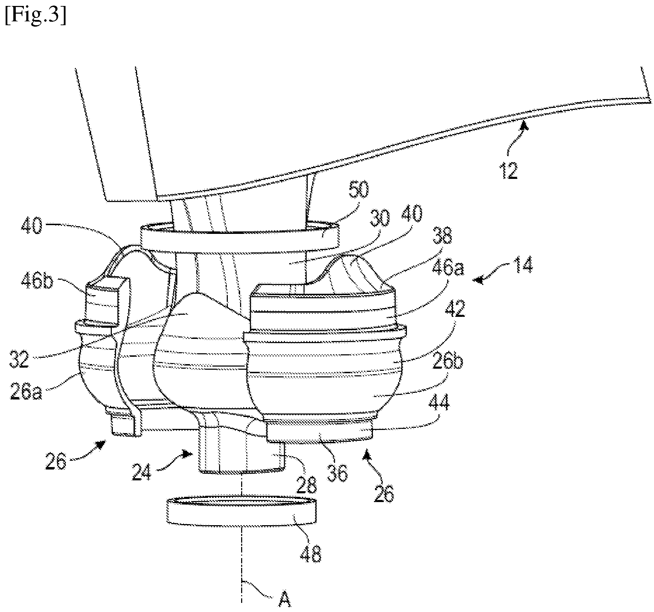

Le corps 24 du pied 14 a une forme particulière mieux visible aux figures 3 à 7.

Le corps 24 comprend pour l'essentiel trois parties à savoir :
- une extrémité libre 28 située du côté opposé à la pale 12,
- une échasse 30 située du côté de la pale, et
- un bulbe 32 situé entre l'extrémité libre et l'échasse.

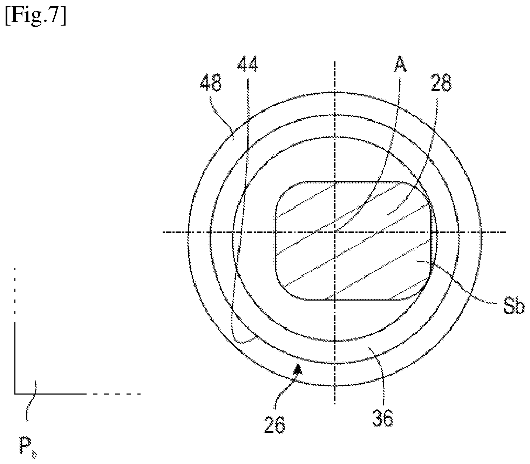

L'extrémité libre 28 a une forme générale parallélépipédique dans l'exemple représenté. Comme on peut le voir à la figure 7, cette extrémité 28 est désaxée ou décalée par rapport à l'axe A pour réaliser un détrompage ou indexage, comme cela sera expliqué plus en détail dans ce qui suit.

On définit Pb comme un plan transversal, c'est-à-dire un plan perpendiculaire à l'axe A, passant sensiblement par le milieu de l'extrémité 28, mesurée le long de l'axe A. Ce plan Pb est appelé plan bas ou inférieur. La figure 7 montre la forme en section de l'extrémité 28 dans ce plan Pb. Cette section, appelée section basse, a une valeur ou une aire, par exemple maximale, notée Sb et a une forme générale rectangulaire dans l'exemple représenté.

Comme cela sera également décrit dans ce qui suit, l'extrémité 28 est configurée pour coopérer avec un système 34 de commande du calage de l'aube.

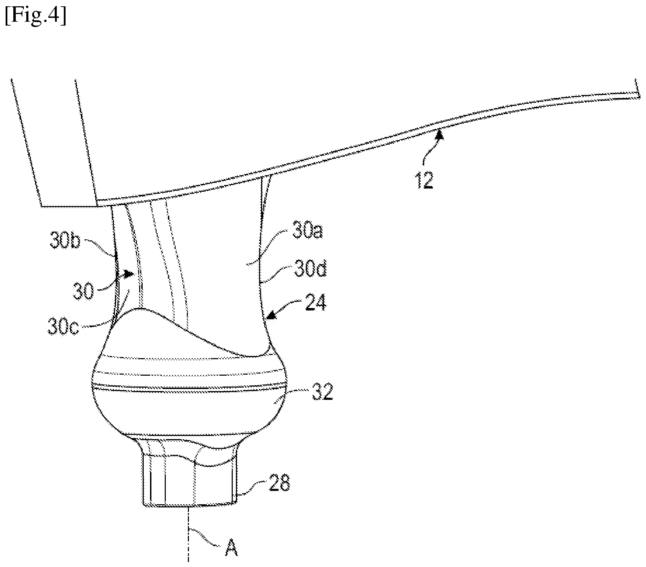

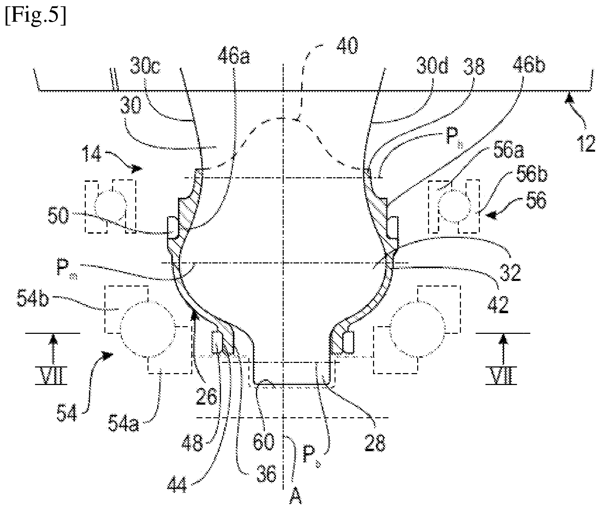

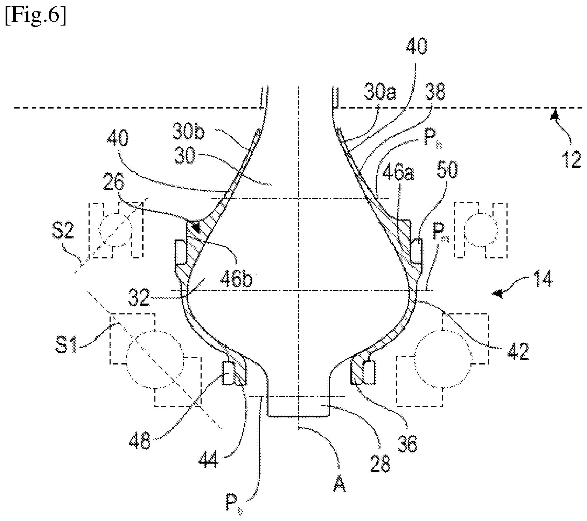

L'échasse 30 a une forme relativement complexe et peut être considérée comme comportant :
- deux flancs latéraux 30a, 30b, situés respectivement du côté de l'intrados 12a et de l'extrados 12b de la pale 12, qui convergent l'un vers l'autre le long de l'axe A et en direction du sommet de la pale 12 (cf. figures 4 et 6), et
- deux bords, respectivement amont 30c et aval 30d, qui au contraire divergent l'un de l'autre le long de l'axe A et en direction du sommet de la pale 12 (cf. figures 4 et 5).

On définit Ph comme un plan transversal passant par l'échasse 30, et en particulier son extrémité inférieure. Ce plan Ph est appelé plan haut ou supérieur. Dans ce plan, l'échasse peut avoir en section une forme non circulaire et par exemple ovale, oblongue, carrée ou rectangulaire. Cette section, appelée section haute, a une valeur ou une aire, par exemple maximale, notée Sh.

Le bulbe 32 a une forme générale renflée ou bombée, ce renflement ou bombement s'étendant tout autour de l'axe A.

On définit Pm comme un plan médian passant par le bulbe 32, et en particulier dans sa partie de plus grande section transversale, qui est notée Sm. Ce plan Pm est appelé plan moyen. Dans ce plan, le bulbe 32 peut avoir en section une forme circulaire bien que cette section ne soit pas limitative. On comprend que le plan Pm est situé entre les plans Pb et Ph. La section transversale du bulbe 32 décroit du plan Pm (Sm) jusqu'au plan Ph, ainsi que depuis le plan Pm, jusque vers le plan Pb. On comprend donc que Sm est supérieur à Sb et Sh. Par ailleurs, dans l'exemple représenté, Sh est supérieur à Sb.

Le fût 26 est réalisé en deux demi-coques 26a, 26b, comme cela est visible à la figure 3, qui sont rapportées et fixées sur le corps 24, par exemple l'un du côté de l'intrados 12a de la pale et l'autre du côté de l'extrados 12b de la pale 12. Les demi-coques 26a, 26b sont ainsi jointes au niveau d'un plan de joint qui passe par l'axe A et qui s'étend sensiblement parallèlement à une corde de la pale 12.

Le fût 26 est avantageusement fixé sur le corps 24, de préférence par collage. La colle s'étend entre le fût et le corps, tout autour de l'axe A.

Le fût 26 est de préférence métallique (en acier, titane ou alliage de titane comme le TA6V). La colle est par exemple une colle époxy chargée en nodules thermoplastiques ou élastomères ou renforcée avec un tissu. Ce procédé d'assemblage par collage est particulièrement adapté du fait de la grande surface de contact entre la cavité du fût et le corps qui peut être composite. La présence d'un joint de colle est avantageuse car il permet de rattraper de légers défauts de forme. Le joint de colle permet aussi d'éviter les frottements à l'interface métal/composite et donc d'augmenter la durée de vie de l'aube.

Plusieurs possibilités sont envisagées pour rapporter le fût 26 sur le corps 24. Une première possibilité est de laisser volontairement un jeu entre les deux demi-coques 26a, 26b du fût 26 une fois rapportées de manière à bien appliquer la pression lors de la polymérisation du joint de colle. La phase de polymérisation peut se faire en autoclave avec l'ensemble de l'aube à l'intérieur d'une bâche à vide. Mais, il est également possible de réaliser cette opération sous presse. Cependant, l'inconvénient de laisser un jeu entre les deux demi-coques 26a, 26b est de moins maîtriser leur positionnement et donc de devoir réaliser une reprise en usinage de la surface externe. Une deuxième possibilité est de rapporter les demi-coques l'une contre l'autre autour du corps sans jeu existant. Cette stratégie est possible, par exemple en usinant un brut déjà découpé en deux parties et maintenues ensemble pendant l'opération d'usinage afin d'assurer la géométrie des surfaces externes une fois les demi-coques réassemblées. Cela permet de maîtriser le positionnement et la géométrie de la surface externe du fût 26 sans avoir besoin d'un usinage supplémentaire après collage. Dans tous les cas, des pions de positionnement ou des butées peuvent être envisagés pour assurer la position relative des demi-coques du fût.

La présence d'un joint de colle entre le corps et le fût n'est toutefois pas obligatoire bien qu'elle soit très avantageuse. Une alternative est d'utiliser des rondelles (ou ressorts) de précontrainte entre le fût et le corps composite afin de pousser radialement le corps et le plaquer sur les portées du fût. On peut également jouer sur la géométrie du fût pour faire en sorte de légèrement « pincer » le corps lorsque les deux demi-coques du fût sont rapportées autour du bulbe. Dans ce cas, c'est la déformation du fût qui génère une précontrainte. Il faut donc prévoir un outillage pour maintenir cette position avant assemblage final.

Comme cela est visible aux figures 5 et 6, le fût 26 recouvre et épouse au moins une partie du bulbe 32 et de l'échasse 30, et a une forme complémentaire en section du bulbe 32, au niveau de la section milieu Sm, et de l'échasse 30, au niveau de la section haute Sh.

Plus précisément, le fût 26 comprend trois parties dans l'exemple représenté,
- une extrémité inférieure 36 qui a une forme générale annulaire (cf. figures 5-7) et qui s'étend au niveau et autour de l'extrémité libre 28 du pied,
- une extrémité supérieure 38 qui s'étend au niveau du plan Ph et qui comprend deux lèvres latérales 40 appliquées sur les flancs 30a, 30b de l'échasse 30, et
- une partie médiane 42 appliquée sur le bulbe 32 et épousant de près sa forme.

Les lèvres 40 prennent appui sur les flancs 30a, 30b de l'échasse 30 et permettent de rigidifier le pied 14 de l'aube et de renforcer sa résistance à la torsion autour de l'axe de calage A.

Ils permettent en outre d'absorber de l'énergie en cas d'impact sur l'aube 10, comme par exemple l'ingestion d'un oiseau. Des congés peuvent être présents sur ces lèvres pour éviter l'usure ou l'endommagement local du corps.

Les surfaces internes du fût 26 qui sont en contact avec le corps 24 servent de portées. Par rapport à une attache brochée, la surface de portée est maximisée par l'exploitation de l'ensemble de la circonférence du bas de l'aube. Sur une attache brochée, seules deux surfaces distinctes du pied d'aube, respectivement situées à l'intrados et à l'extrados sont en appui sur des portées alors que les surfaces du pied d'aube situées au bord d'attaque et au bord de fuite sont libres. Toujours en comparaison avec une attache brochée, la hauteur des portées dans la direction radiale est bien plus importante ce qui contribue également à augmenter considérablement leur surface. Cette grande surface d'appui permet de diminuer la pression de contact quel que soit le cas de fonctionnement.

Le fût 26 comprend deux surfaces cylindriques 44, 46a de montage de bagues de frettage 48, 50. Les bagues de frettage 48, 50 permettent de maintenir les demi-coques 26a, 26b serrées l'une contre l'autre et sur le corps 24. Les bagues de frettage 48, 50 s'étendent autour de l'axe A.

La surface 44 est située sur l'extrémité inférieure 36 et est orientée radialement vers l'extérieur par rapport à l'axe A. Elle reçoit la bague 48 par frettage qui est engagée depuis le bas et prend appui axialement sur une portée cylindrique située à la jonction de l'extrémité 36 et de la partie médiane 42 du fût 26.

La surface 46a est située sur la partie médiane 42 et est orientée radialement vers l'extérieur par rapport à l'axe A. Elle reçoit la bague 50 par frettage qui est engagée depuis le haut et prend appui axialement sur une portée cylindrique située à proximité du plan Pm.

On constate que la surface 46a est située juste à côté d'une surface cylindrique 46b qui est destinée à recevoir une bague d'immobilisation 52, comme cela sera décrit dans ce qui suit.

Les surfaces 44, 46a, ainsi que les bagues 48, 50, ont des diamètres différents dans l'exemple représenté. La surface 46a a un diamètre supérieur à celui de la surface 44 et donc la bague 50 a un diamètre supérieur à celui de la bague 48.

Les surfaces 46a, 46b peuvent avoir des diamètres identiques ou différents. La surface 46b peut par exemple avoir un diamètre légèrement inférieur à celui de la surface 46a. C'est notamment le cas où la bague 50 devrait être monté avec un jeu radial prédéterminé par rapport à cette surface 46b.

Les figures 5 et 6 permettent de constater que la bague 50 est située entre les plans Ph et Pm, et que la bague 48 est située entre les plans Pm et Ps.

Les figures 5 et 6 montrent également la position des bagues 48, 50 et des plans Pm, Ph, Ps par rapport à des paliers à roulement 54, 56 qui s'étendent autour de l'axe A et du pied 14.

Les paliers 54, 56 sont ici au nombre de deux et sont respectivement un palier inférieur 54 et un palier supérieur 56.

Les paliers 54, 56 sont du type à roulement à billes. Dans l'exemple représenté, ils ont des diamètres différents et leurs billes ont également des diamètres différents.

Le palier 54 s'étend sensiblement entre les plans Pm et Pb et donc autour d'une partie inférieure du bulbe 32. Il s'étend également autour de la bague 48. Ce palier 54 a un diamètre plus petit que l'autre palier 56, et ses billes ont un diamètre supérieur à celles de l'autre palier 56.

Le palier 54 est en outre à contact oblique. Dans l'exemple représenté, les points ou surfaces d'appui des billes sur les chemins de roulement de leurs bagues 54a, 54b sont situés sur une surface tronconique S1 qui s'étend le long de l'axe A et dont le plus grand diamètre est situé du côté du sommet de l'aube.

Le palier 56 s'étend sensiblement entre les plans Pm et Ph et donc autour d'une partie supérieure du bulbe 32. Il s'étend également autour de la bague 50. Le palier 56 est en outre à contact oblique. Dans l'exemple représenté, les points ou surfaces d'appui des billes sur les chemins de roulement de leurs bagues 56a, 56b sont situés sur une surface tronconique S2 qui s'étend le long de l'axe A et dont le plus grand diamètre est situé du côté de l'extrémité libre du pied de l'aube.

La position de la section milieu entre les deux paliers 54, 56 est très avantageuse en termes d'encombrement radial car une partie de la hauteur de portée entre la section milieu et la section haute se situe à l'intérieur du bol 58, contrairement à l'état de l'art sur les attaches brochées intégrées dans un pivot. Cela contribue à diminuer l'encombrement radial du système de commande 34.

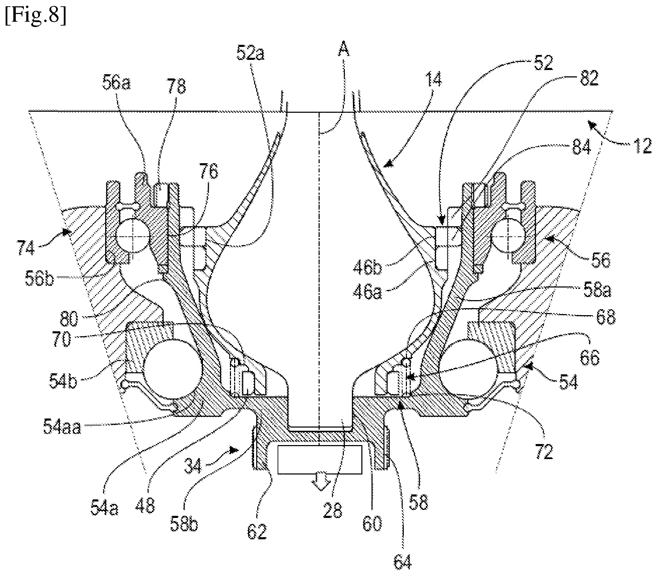

Les figures 8 à 17 illustrent un exemple de réalisation du système et en particulier de la bague d'immobilisation 52.

Le système 34 comprend un bol 58 comportant une paroi annulaire 58a s'étendant autour de l'axe A. Cette paroi 58a comporte une extrémité axiale inférieure fermée par une paroi de fond 58b, et une extrémité axiale supérieure ouverte et configurée pour autoriser le montage du pied 14 de l'aube à l'intérieur du bol.

La paroi de fond 58b est configurée pour coopérer par complémentarité de formes avec l'extrémité libre du pied 14, et donc avec l'extrémité 28 du corps 24, de façon à ce que le bol soit solidarisé en rotation avec le pied autour de l'axe.

Dans le cas présent, on comprend que la paroi de fond 58b comprend un évidement 60 ayant une section transversale non circulaire, et en particulier rectangulaire, et configuré pour recevoir l'extrémité 28 (figure 8). Comme on le voit à la figure 5, cet évidement 60 est excentré par rapport à l'axe A de façon analogue à l'extrémité 28 (cf. figure 7). Cet excentrement permet un indexage et un détrompage lors de l'insertion et du montage du pied dans le bol 58, une seule position d'engagement de l'extrémité 28 dans l'évidement 60 étant possible.

L'évidement 60 est situé sur une face supérieure ou interne de la paroi de fond 58b du bol 58, qui est donc située à l'intérieur du bol et orientée du côté du pied.

Le système 34 génère un couple au pied d'aube qui s'oppose au moment de torsion issu des efforts aérodynamiques et des efforts centrifuges. L'extrémité 28 du pied 14 pourrait être enveloppée dans le fût 26, comme le reste du corps 24 du pied 14. Dans ce cas, celui-ci aurait également une forme non circulaire afin de contraindre sa rotation. Cependant, il est avantageux de laisser sortir cette extrémité du corps en dehors du fût, comme évoqué dans ce qui précède, afin de contraindre directement la rotation du corps. On obtient ainsi un chemin d'effort plus direct, le moment de torsion s'appliquant directement sur le corps. La section basse possède des dimensions strictement inférieures à la dimension maximale de la section milieu afin de limiter l'encombrement circonférentiel à cette hauteur. En conséquence, le fût possède également un encombrement circonférentiel plus faible à cette hauteur qu'au niveau de la section milieu. Cela permet de diminuer le diamètre du palier inférieur qui se situe sous la section milieu. Donc, le pied d'aube peut être intégré plus bas radialement ce qui diminue fortement le rapport de moyeu théorique associé à l'intégration du pied. Or, l'homme du métier sait qu'un rapport de moyeu faible améliore les performances du moteur, notamment car celui-ci est plus compact et donc plus léger. Ce dernier point est un avantage très important de la solution technique comparée à la concurrence qui propose classiquement des fûts de forme externe cylindrique.

La paroi de fond 58b comprend une face inférieure ou externe, qui est située du côté opposé au pied 14, et qui comprend un prolongement cylindrique 62 s'étendant le long de l'axe A et comportant un filetage externe ou des cannelures rectilignes externes 64 pour l'accouplement en rotation du système avec un mécanisme de changement de pas qui n'est pas illustré et qui est commun aux différents systèmes 34 et aubes 10 de l'hélice.

Un organe 66 élastiquement déformable, tel qu'un ressort hélicoïdal, s'étend autour de l'axe A et est monté à l'intérieur du bol 58. Cet organe 66 prenant appui axialement sur la surface supérieure de la paroi de fond 58b, à la périphérie externe de cette surface dans l'exemple représenté, et est configuré pour solliciter axialement le pied de l'aube vers l'extérieur du bol c'est-à-dire du côté du sommet de l'aube.

L'organe 66 prend appui sur une portée cylindrique 68 du fût 26. Dans l'exemple représenté, l'organe 66 est centré par engagement de son extrémité supérieure sur et autour d'un rebord cylindrique 70 du fût, et par engagement de son extrémité inférieure sur et autour d'un rebord cylindrique 72 du bol situé à la périphérie externe de la paroi de fond 58b.

L'organe 66 s'étend ici autour de la bague de frettage 48.

Comme on le voit à la figure 8, le bol 58 est conçu pour supporter les paliers 54, 56 qui assurent le centrage et le guidage du bol autour de l'axe A vis-à-vis d'un carter 74 ou d'une structure fixe de la turbomachine.

Les paliers 54, 56 peuvent faire partie du système de commande. En particulier, au moins l'un des paliers de guidage peut avoir sa bague interne qui est intégrée au bol.

C'est ici le cas du palier inférieur 54 qui a sa bague interne 54a intégrée au bol 58. En pratique, cela signifie que le bol comprend un chemin de roulement 54aa à sa périphérie externe sur laquelle roule directement les billes du palier 54. Ce chemin de roulement comprend une surface annulaire à section incurvée concave. Ce chemin de roulement est ici située à l'extrémité inférieure du bol et de la paroi 58a. La bague externe 54b du palier 54 est fixée au carter 74, par exemple par frettage. Par ailleurs, le bol 58 est avantageusement conçu pour appliquer une précontrainte au palier 54.

La bague externe 56b du palier 56 est fixée au carter 74, par exemple par frettage. Sa bague interne 56a est engagée sur et autour de l'extrémité supérieure libre du bol 58 et de la paroi 58a. Cette extrémité de la paroi 58a comprend une surface cylindrique externe 76 de montage de la bague interne 56a ainsi qu'un filetage externe de vissage d'un écrou 78 destiné à prendre appui axialement sur la bague interne 56a pour la maintenir serrée axialement contre un épaulement cylindrique externe 80 du bol 58.

La paroi 58a du bol comprend en outre à sa périphérie interne des moyens configurés pour coopérer avec la bague d'immobilisation 52 précitée.

La bague d'immobilisation 52 s'étend autour de l'axe A et est configurée pour être montée autour du pied 14. Cette bague d'immobilisation 52 est configurée pour être montée à l'intérieur du bol et pour coopérer respectivement avec le pied 14 et la paroi annulaire 58a du bol 58 afin d'assurer la rétention axiale du pied dans le bol.

Dans l'exemple de réalisation des figures 8 à 17, cette bague d'immobilisation 52 est une bague de crabotage qui comporte des dents externes 84 de crabot configurées pour coopérer avec des dents internes 82 de crabot complémentaires de la paroi annulaire 58a du bol 58.

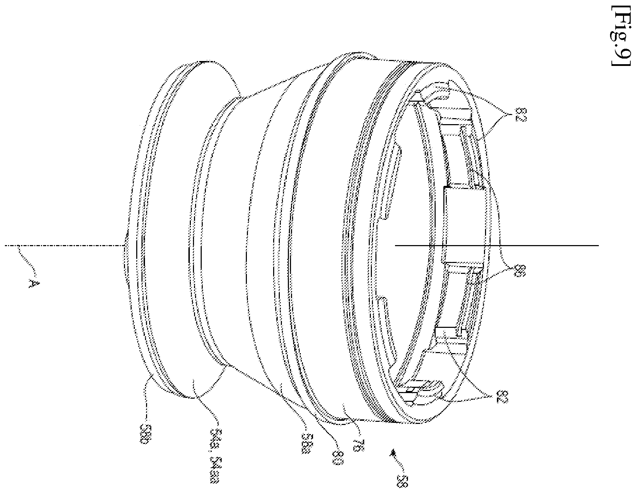

Les dents 82 du bol 58 sont mieux visibles à la figure 9. Ces dents sont régulièrement espacées autour de l'axe A. Elles sont au nombre de six dans l'exemple non limitatif représenté. Elles ont par exemple chacune une extension angulaire autour de l'axe A, comprise entre 20 et 30° environ. Chacune des dents 82 comprend à sa périphérie interne une rainure 86 orientée circonférentiellement par rapport à l'axe A. Les rainures 86 des dents 82 forment une gorge discontinue autour de l'axe A.

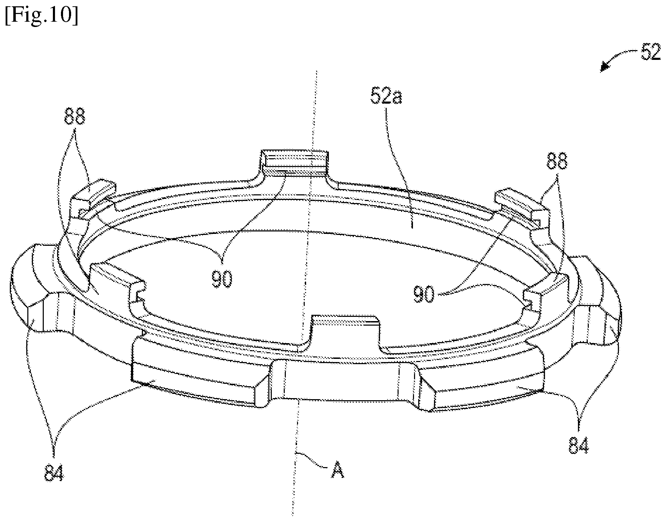

La bague de crabotage est mieux visible à la figure 10. Ses dents 84 sont régulièrement espacées autour de l'axe A. Elles sont au nombre de six dans l'exemple non limitatif représenté. Elles ont par exemple chacune une extension angulaire autour de l'axe A, comprise entre 20 et 30° environ.

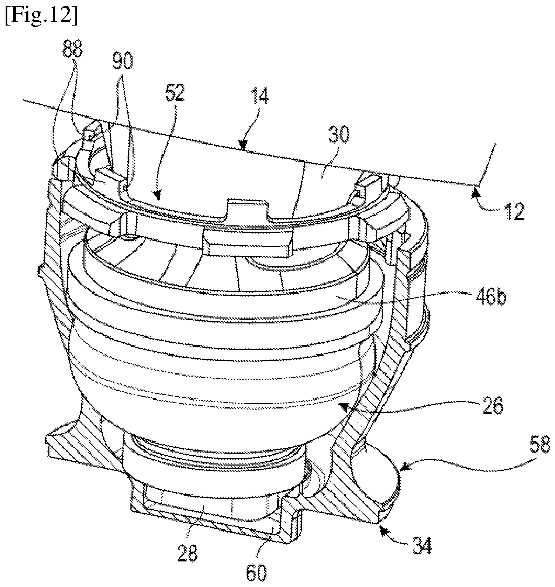

Les dents 84 sont complémentaires des dents 82 et sont configurées pour coopérer par crabotage avec ces dents. Le crabotage est un mode de montage bien connu dans le domaine aéronautique et qui sera illustré par les figures 12 à 17 illustrant un procédé de montage.

La bague 52 comprend une surface cylindrique interne 52a destinée à coopérer par glissement avec la surface 76 précitée du bol 58.

La bague 52 comprend une seconde série de dents 88, qui s'étendent axialement vers le haut, du côté du sommet de l'aube 10. Ces dents 88 sont également régulièrement espacées autour de l'axe A. Elles sont au nombre de six dans l'exemple représenté. Elles peuvent être disposées en quinconce vis-à-vis des dents 84, c'est-à-dire que les dents 88 sont alignées axialement avec les espaces circonférentiels situées entre les dents 84. A titre d'exemple non limitatif, les dents 88 ont chacune une extension angulaire autour de l'axe A, comprise entre 10 et 20° environ.

Chacune des dents 88 comprend à sa périphérie interne une rainure 90 orientée circonférentiellement par rapport à l'axe A. Les rainures 90 des dents 88 forment une gorge discontinue autour de l'axe A.

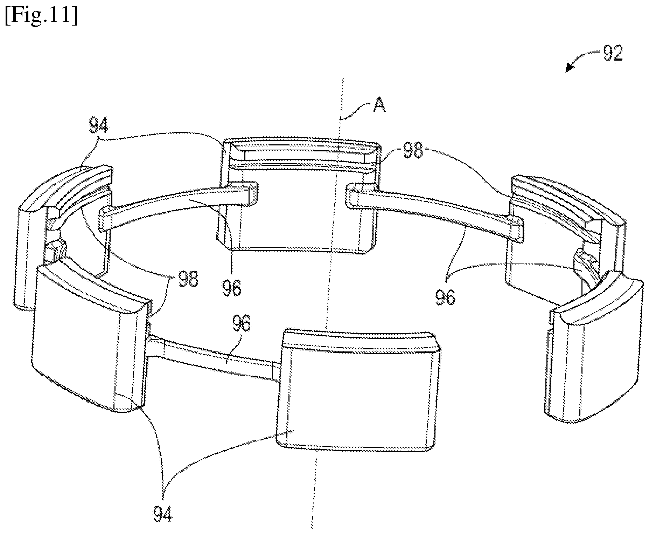

La figure 11 montre un anneau de verrouillage 92 qui est configuré pour être engagé axialement entre les dents 82, 84 de crabot pour empêcher la rotation de la bague 52 à l'intérieur du bol 58.

Cet anneau 92 comprend des patins 94, ici au nombre de six dans l'exemple non limitatif représenté, destinés à être engagés dans les espaces inter-dents s'étendant entre les dents 82 et 84. On comprend donc que ces patins 94 ont des formes complémentaires à celles de ces espaces et sont régulièrement espacés autour de l'axe A.

Dans l'exemple représenté, les patins 94 sont solidaires les uns des autres par des pontets 96 s'étendant circonférentiellement entre les patins 94. Les pontets 96 sont au nombre de cinq et s'étendent chacun entre deux patins 94 adjacents. Deux des patins 94 ne sont volontairement pas reliés ensemble par un pontet de façon à ce que l'anneau 92 soit ouvert. Cela peut simplifier le montage par écartement ou rapprochement de ces patins l'un de l'autre, lors du montage de l'anneau dans le système 34.

Chacun des patins 94 comprend à sa périphérie interne une rainure 98 orientée circonférentiellement par rapport à l'axe A. Les rainures 98 des patins 94 forment une gorge discontinue autour de l'axe A.

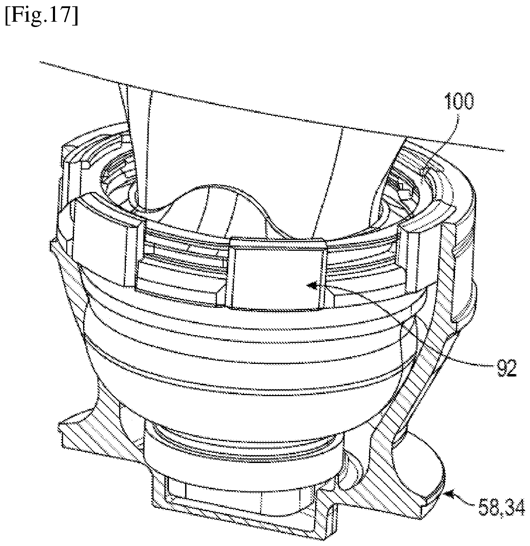

Le système comprend en outre un jonc annulaire 100 qui est seulement visible à la figure 17.

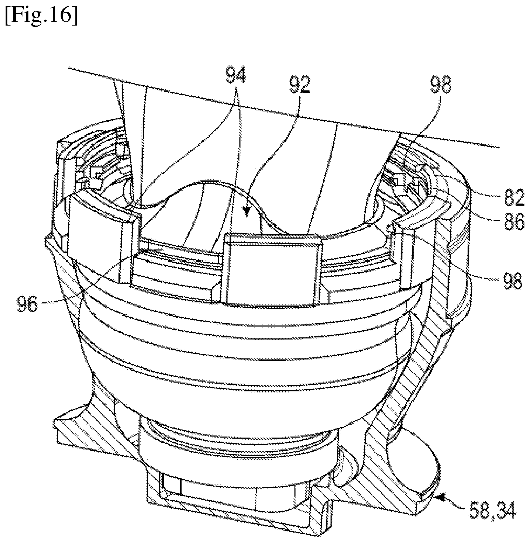

Le jonc 100 est monté dans le bol 58 pour bloquer axialement l'anneau de verrouillage 92 dans le bol 58. Le jonc 100 peut également être fendu ou ouvert pour faciliter son montage et est destiné à être engagé dans les rainures 86 des dents 82 du bol ainsi que les rainures 98 des patins 94 de l'anneau 92, lorsque ces rainures 86, 98 sont toutes situées ans un même plan perpendiculaire à l'axe A et sont disposées circonférentiellement les unes par rapport aux autres pour former une gorge complète autour de l'axe A (cf. figures 16 et 17).

On se réfère maintenant aux figures 12 à 17 qui illustrent un procédé de montage de l'ensemble formé par une aube 10 telle qu'illustrée à la figure 1 et un système 34 tel que représenté à la figure 8.

Dans la première étape illustrée à la figure 12, le pied 14 de l'aube 10 est engagé dans le bol 58 du système 34 par translation axiale le long de l'axe A, jusqu'à ce que l'extrémité 28 du corps 24 du pied s'engage dans l'évidement 60 du bol 58. Comme on le voit dans le dessin, la bague 52 est déjà montée prisonnière autour de l'échasse 30 du corps du pied. Bien qu'il ne soit pas représenté dans cette figure, l'organe 66 (figure 8) est comprimé lors de l'insertion du pied 14 dans le bol 58.

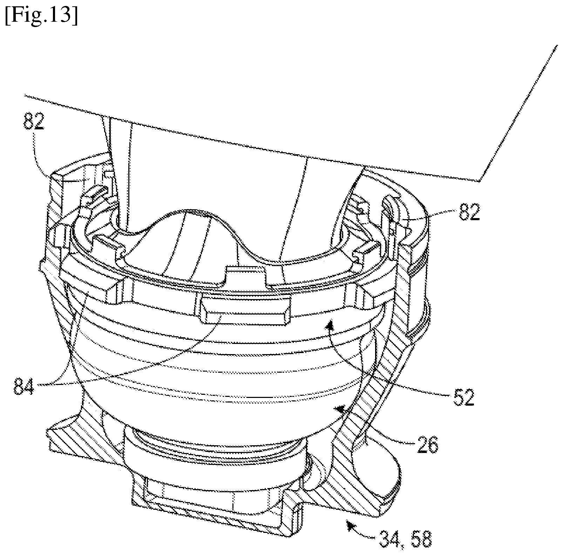

Dans la seconde étape illustrée par les figures 12 et 13, la bague 52 est positionnée angulairement autour de l'axe A de façon à ce que ses dents 84 soient alignées avec les espaces situés entre les dents 82 du bol. La bague 52 est alors déplacée en translation axiale à l'intérieur du bol 58 jusqu'à ce que la bague 52 soit engagée sur la surface 46b du fût 26 et que les dents 84 soient situées juste en dessous des dents 82, comme illustré à la figure 13. Les rainures 90 prévues sur les dents peuvent servir à la préhension de la bague 52 par un outil approprié.

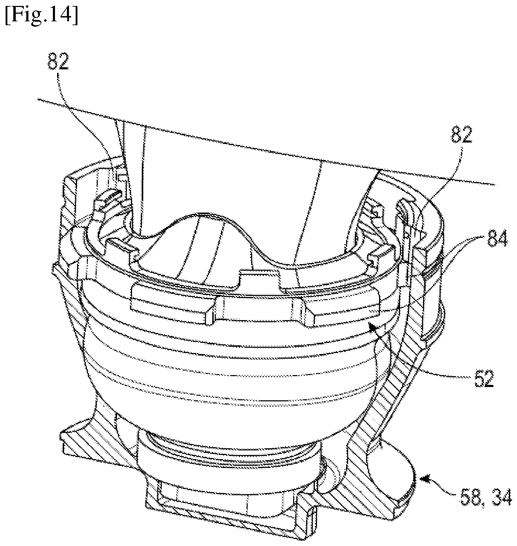

Dans la troisième étape illustrée par les figures 13 et 14, la bague 52 est déplacée en rotation autour de l'axe A de façon à ce que ces dents 82, 84 soient alignées axialement les unes avec les autres. Du fait de l'extension angulaire des dents dans l'exemple représenté, ce déplacement angulaire est ici de l'ordre de 25-30°. Les dents 88 peuvent servir à la préhension de la bague 52 et à sa rotation par l'outil précité. L'organe 66, non représenté, sollicite axialement le pied vers l'extérieur du bol, ce qui provoque l'appui axial des dents 84 sur les dents 82. Le pied est ainsi maintenu axialement à l'intérieur du bol et du système 34. En fonctionnement, les efforts centrifuges appliqués sur l'aube sont transmis par les dents 82, 84 au bol 58, ces efforts étant directement repris par le palier 54 dont la bague interne 54a est intégré au bol 58.

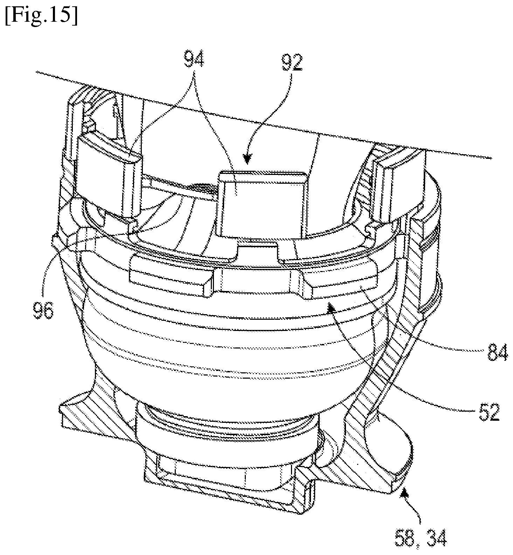

Dans la quatrième étape illustrée par les figures 15 et 16, l'anneau 92 est positionné angulairement autour de l'axe A de façon à ce que ses patins 94 soient alignés avec les espaces situés entre les dents 82, 84. L'anneau 92 est alors déplacé en translation axiale à l'intérieur du bol 58 jusqu'à ce que les patins 94 soient engagés dans ces espaces. Les pontets 96 peuvent alors prendre appui sur les dents 84 de la bague 52. L'anneau 92 empêche ainsi toute rotation de la bague 52 à l'intérieur du bol 58.

Dans la dernière étape illustrée par la figure 17, le jonc 100 est engagé dans les rainures 86, 98 alignées circonférentiellement les unes avec les autres. Le jonc 100 empêche un démontage accidentel de l'anneau 92.

On comprend que le démontage de l'aube est réalisé en réalisant les étapes précitées dans l'ordre inverse. On comprend également qu'une des étapes essentielles du montage et du démontage du pied concerne la bague d'immobilisation 52. Cette bague 52 est manipulable depuis l'extérieur d'une turbomachine, ce qui est particulièrement avantageux lors d'une opération de maintenance. Une aube peut être démontée et retirée de l'hélice par démontage et retrait d'un nombre minimum de pièces.

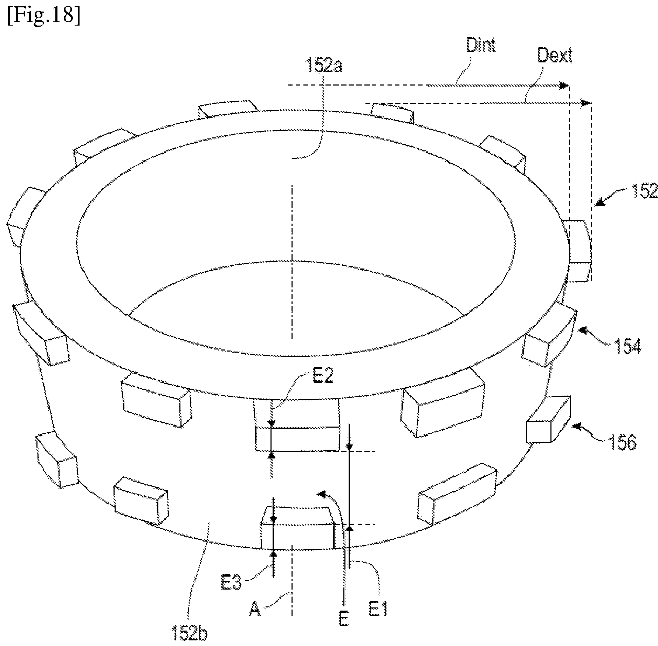

On se réfère désormais à la figure 18 qui illustre un exemple de réalisation d'une bague 152 à double crabotage pour un système 34 de commande selon l'invention.

La bague 152 comprend un corps annulaire qui comprend a sa périphérie interne une surface cylindrique interne 152a et à sa périphérie externe deux rangées annulaires de dents externes de crabotage, référencées 154 et 156. La rangée de dents 154 est située à une extrémité supérieure de la bague 152 et destinée à être située du côté de la pale 12 de l'aube 10 en position de montage autour du pied 14 de l'aube 10.

La rangée de dents 156 est située à une extrémité inférieure de la bague 152.

Les rangées de dents 154, 156 sont séparées l'une de l'autre par un espace E qui a une dimension axiale notée E1. Cette dimension E1 est mesurée le long de l'axe de révolution de la bague 152 qui est confondu avec l'axe A de calage de l'aube 10 en position de montage.

La rangée de dents 154 a une épaisseur axiale E2 mesurée le long de cet axe et la rangée de dents 156 a une épaisseur axiale E3 mesurée le long de cet axe.

Les dents des deux rangées 154, 156 peuvent s'étendre radialement vers l'extérieur par rapport à l'axe A depuis une même surface cylindrique externe 152b. Les rangées de dents 154, 156 ont alors des diamètres internes Dint identiques ou proches. Les rangées de dents 154, 156 peuvent également avoir des diamètres externes Dext identiques ou proches.

Le nombre des dents de chaque rangée 154, 156 et leur étendue angulaire peuvent être choisies en fonction notamment de la résistance mécanique souhaitée de la bague 152.

La position angulaire des dents d'une rangée par rapport aux dents de l'autre rangée dépend du type de montage de la bague 152 envisagé.

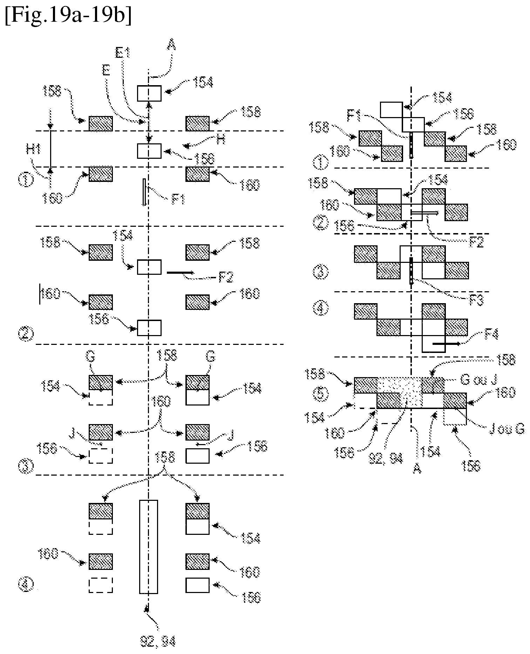

La figure 19a illustre une première cinématique de montage de la bague 152 lorsque les dents des deux rangées 154, 156 sont alignées axialement, comme c'est le cas dans l'exemple de la figure 18.

Dans ce cas, le double crabotage est réalisé par une unique translation de la bague 152 dans le bol 58 et par une unique rotation de la bague 152 à l'intérieur du bol 58.

Comme cela est schématiquement représenté à la figure 19a, le bol 58 comprend également deux rangées annulaires de dents internes 158, 160. Cette figure montre seulement deux dents de chaque rangée 158, 160 et une dent de chaque rangée 154, 156 pour plus de clarté.

La rangée de dents 158 est située à une extrémité supérieure du bol 58 et destinée à coopérer par crabotage avec la rangée de dents 154, et la rangée de dents 160 est située juste en dessous de la rangée 158 et est destinée à coopérer par crabotage avec la rangée de dents 156.

Les rangées de dents 158, 160 sont séparées l'une de l'autre par un espace H qui a une dimension axiale notée H1. Cette dimension est mesurée le long de l'axe A. Cette dimension H1 est supérieure à l'épaisseur E2 des dents de la rangée 154 de façon à ce que ces dents puissent être engagées entre deux dents des rangées 158, 160 du bol.

La flèche F1 illustre le déplacement en translation de la bague 152 à l'intérieur du bol 58 le long de l'axe A. Les dents des deux rangées 154, 156 de la bague 152 sont alignées avec les espaces inter-dents des rangées 158, 160. Le déplacement est réalisé jusqu'à ce que les dents de la rangée 154 soient alignées transversalement avec l'espace H.

La flèche F2 illustre le déplacement en rotation de la bague 152 à l'intérieur du bol 58 autour de l'axe A. Le déplacement est réalisé jusqu'à ce que les dents des rangées 154, 156 soient alignées axialement avec les dents des rangées 158, 160.

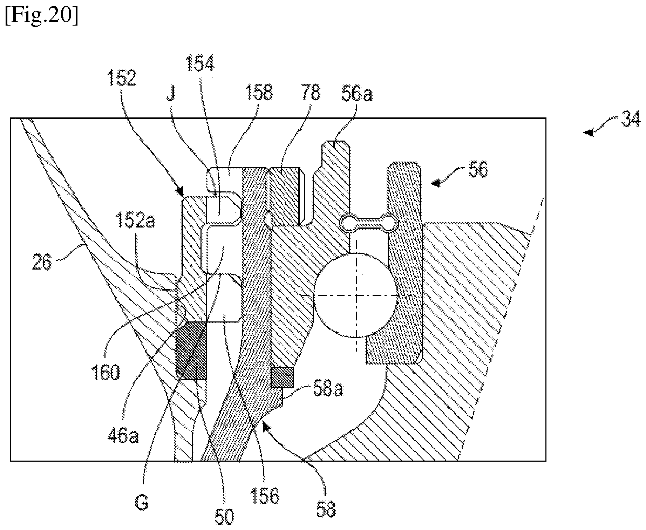

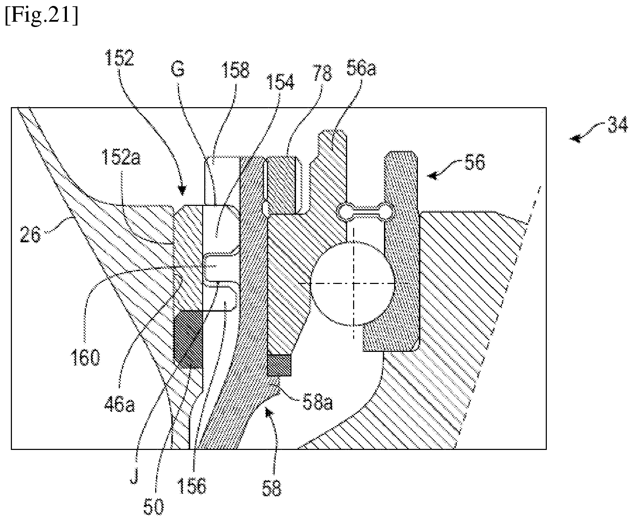

Comme cela sera décrit plus en détail dans ce qui suit en référence aux figures 20 et 21, les dents de l'une des rangées 154, 156 sont configurées pour être en appui axial G contre les dents de l'une des rangées 158, 160 pour assurer la retenue axiale de l'aube 10 dans le bol 58. C'est le cas des rangées 154, 158 dans l'exemple schématique illustré.

Les dents de l'autre des rangées 154, 156 sont configurées pour être séparées par un jeu axial J prédéterminé des dents de l'une des rangées 158, 160 pour assurer une sécurité dans cette retenue en cas de défaillance. C'est le cas des rangées 156, 160 dans l'exemple schématique illustré.

Un anneau de verrouillage 92 ou des patins 94 du type de ceux décrits dans ce qui précède, peuvent alors être utilisés pour immobiliser en rotation la bague 152 dans le bol.

La figure 19b illustre une seconde cinématique de montage de la bague 152 lorsque les dents des deux rangées 154, 156 sont décalées angulairement et ne sont donc pas alignées axialement. L'exemple représenté montre le cas d'un décalage angulaire d'un pas, ce pas représentant l'étendue angulaire d'une dent.

Dans ce cas, le double crabotage est réalisé par deux translations de la bague 152 dans le bol 58 et par deux rotations de la bague 152 à l'intérieur du bol 58.

La flèche F1 illustre le déplacement en translation de la bague 152 à l'intérieur du bol 58 le long de l'axe A. Les dents de la rangée 156 de la bague sont alignées avec les espaces inter-dents de la rangée 158. Le déplacement est réalisé jusqu'à ce que les dents de la rangée 156 soient situées sous les dents de la rangée 158.

La flèche F2 illustre le déplacement en rotation de la bague 152 à l'intérieur du bol 58 autour de l'axe A. Le déplacement est réalisé jusqu'à ce que les dents de la rangée 156 soient alignées axialement avec les espaces inter-dents de la rangée 160.

La flèche F3 illustre le déplacement en translation de la bague 152 à l'intérieur du bol 58 le long de l'axe A. Le déplacement est réalisé jusqu'à ce que les dents de la rangée 156 soient situées sous les dents de la rangée 160.

La flèche F4 illustre le déplacement en rotation de la bague 152 à l'intérieur du bol 58 autour de l'axe A. Le déplacement est réalisé jusqu'à ce que les dents de la rangée 156 soient alignées axialement avec les dents de la rangée 160 et que les dents de la rangée 154 soient alignées axialement avec les dents de la rangée 158.

Comme évoqué dans ce qui précède, les dents de l'une des rangées 154, 156 sont configurées pour être en appui axial G contre les dents de l'une des rangées 158, 160 pour assurer la retenue axiale de l'aube dans le bol. Les dents de l'autre des rangées 154, 156 sont configurées pour être séparées par un jeu axial J prédéterminé des dents de l'une des rangées 158, 160 pour assurer une sécurité dans cette retenue en cas de défaillance.

Un anneau de verrouillage 92 ou des patins 94 du type de ceux décrits dans ce qui précède, peuvent alors être utilisés pour immobiliser en rotation la bague 152 dans le bol.

Les figures 20 à 22 illustrent des modes de réalisation plus concrets de la bague 152 à double crabotage selon l'invention.

Chacune de ces bagues 152 est utilisée dans un environnement proche de celui décrit dans ce qui précède en relation avec la figure 8 notamment. La description qui précède s'applique donc aux modes de réalisation des figures 20 à 22 dans la mesure où elle ne contredit pas ce qui suit.

En ce qui concerne la figure 20, l'extrémité axiale supérieure de la paroi 58a du bol 58 comprend à sa périphérie interne les deux rangées de dents 158, 160. Les dents des rangées 158, 160 ont des diamètres interne et externe sensiblement identiques. La périphérie externe de l'extrémité axiale supérieure de la paroi 58a comprend le filetage externe de vissage de l'écrou 78 qui prend appui sur la bague interne 56a du palier 56.

Dans ce mode de réalisation, la rangée de dents actives est la rangée de dents 156, c'est-à-dire la rangée de dents inférieure. Cette rangée de dents 156 est destinée à coopérer par appui axial G vers l'extérieur avec les dents 160 du bol 58. La rangée de dents passives est la rangée de dents 154, c'est-à-dire la rangée de dents supérieure. Cette rangée de dents 154 est séparée par un jeu axial J de la rangée de dents 158.

La bague 152 prend appui axialement vers l'intérieur sur la bague de frettage 50 et sa surface cylindrique externe 152a coopère par glissement avec la surface cylindrique 46a lors du double crabotage de la bague. Cette surface 152a s'étend ici sur une partie seulement de la dimension axiale de la bague 152. La dimension axiale de la surface 152a représente environ entre 90% et 100% de la dimension axiale maximale des dents de la rangée 156 ou de la bague 152.

Le mode de réalisation de la figure 20 représente une solution relativement simple dans laquelle les dents de crabot 154 passives ne sont pas soumises à des efforts particuliers et sonc donc isolées, sauf défaillance des dents de crabot 156 actives. Cependant, on peut craindre qu'à la suite de la rupture du crabot actif, le chemin d'effort du crabot passif puisse être également endommagé, ce qui amoindrirait son efficacité.

Concernant la figure 21, la rangée de dents actives est la rangée de dents 154, c'est-à-dire la rangée de dents supérieure. Cette rangée de dents 154 est destinée à coopérer par appui axial G vers l'extérieur avec les dents 158 du bol 58. La rangée de dents passives est la rangée de dents 156, c'est-à-dire la rangée de dents inférieure. Cette rangée de dents 156 est séparée par un jeu axial J de la rangée de dents 160.

La bague 152 prend appui axialement vers l'intérieur sur la bague de frettage 50 et sa surface cylindrique externe 152a coopère par glissement avec la surface cylindrique 46a lors du double crabotage de la bague. Cette surface 152a s'étend ici sur une majeure partie de la dimension axiale de la bague 152. La dimension axiale de la surface 152a représente environ entre 90% et 100% de la dimension axiale maximale de la bague.

Le mode de réalisation de la figure 21 représente une solution compacte. Cette solution présente également l'avantage d'une meilleure fiabilité du crabot passif, car il y a moins de chances que la rupture du crabot actif ait endommagé le chemin d'effort du crabot passif.

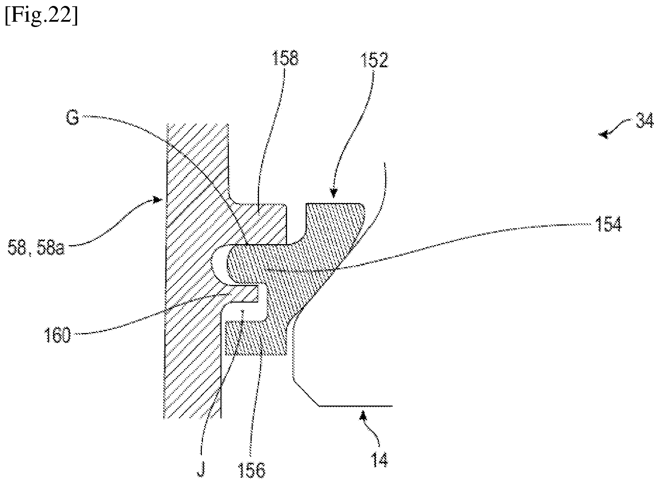

Dans la variante de réalisation de la figure 22, la bague 152 diffère de celle des figures 20 et 21 notamment en ce que sa périphérie interne a une forme tronconique évasée vers l'intérieur et qui est complémentaire au moins en partie du bulbe du pied. Le fût 26 précité peut alors être supprimé voire considéré comme intégré à la bague 152 (du côté extérieur du bulbe).

Par ailleurs, la bague 152 peut être sectorisée et comprendre une pluralité de secteurs angulaire disposés les uns à côté des autres autour de l'axe A. Bien que les secteurs de bague 152 soient indépendants, ils peuvent être montés individuellement de la même façon qu'une bague monobloc, par double crabotage avec l'une des cinématiques des figures 19a et 19b.

Avantageusement, le jeu J précité est déterminé de façon à générer un balourd lorsque l'hélice équipé du système 34 est mise en rotation. Ce balourd est généré par le déplacement radial de l'aube 10 après rupture du crabot primaire et peut être détecté par un capteur approprié qui équipe l'hélice. La détection de ce balourd peut déclencher l'arrêt moteur pour limiter l'effort d'impact lors du contact après rupture du crabot primaire.

Quel que soit le mode de réalisation, les dents de crabot passives peuvent avoir des dimensions, et en particulier des épaisseurs axiales, inférieures à celles des dents de crabot actives, car contrairement au crabot actif, la crabot passif n'est pas dimensionné en fatigue et peut accepter une contrainte plus élevée.

L'invention propose également un procédé de montage du système 34, qui comprend les étapes suivantes :
a) insertion du pied 14 de l'aube 10 à l'intérieur du bol 58 du système 34, par déplacement de l'aube 10 dans une direction parallèle à l'axe de calage A,
b) engagement de l'extrémité libre 28 du pied 14 dans l'évidement 60 de la paroi de fond 58b du bol 58 de façon à solidariser en rotation le bol 58 avec le pied 14 de l'aube 10, et
c) engagement de la bague d'immobilisation 52, préalablement montée ou présente autour du pied 14 de l'aube 10, dans le bol 58 et montage par crabotage de cette bague 52 dans le bol 58 et sur le pied 14 de l'aube 10 de façon à assurer la rétention axiale du pied 14 dans le bol 58. La cinématique de la figure 19a ou de la figure 19b est adoptée en fonction du type de double crabotage, comme évoqué dans ce qui précède. Ainsi, à l'étape c), il y a engagement de la bague 152 dans le bol 58 et sur le pied 14 de l'aube 10 de façon à assurer la rétention axiale du pied 14 dans le bol 58, en particulier en pouvant considérer des secteurs de la bague 152. Il est possible de prévoir une encoche d'introduction dans le bol 58 pour faciliter le montage de la bague et le cas échéant de ses secteurs ou alors il est possible d'adapter la géométrie des secteurs pour permettre le montage sans encoche d'introduction.

D'autres variantes de réalisation non représentées sont envisageables, parmi lesquelles :
- les demi-coques 26a, 26b du fût 26 peuvent être rapportées sur le corps 24 par boulonnage, rivetage, soudure, etc. ;
- la colle de liaison du fût 26 au corps 24 peut être une colle époxy mais il peut également s'agir d'un élastomère ou d'une colle thermoplastique. Il est également possible d'utiliser un film antiadhésif pour laisser la possibilité d'un mouvement relatif en limitant l'usure par frottement ;
- toujours à propos de l'interface fût / corps, on peut aussi combiner plusieurs solutions techniques ensemble parmi celles proposées (collage, précontrainte par rondelles ou ressorts, précontrainte par la géométrie du fût) ; ces solutions sont combinables indépendamment de l'existence d'un jeu entre les deux parties du fût ;
- bien que cela soit moins avantageux, la position radiale du palier assurant la rétention au centrifuge de l'aube peut être inversée avec la position radiale du palier qui assure la reprise des moments de flexion issus des efforts aérodynamiques et centrifuges.

## Revendications

1. Système (34) de commande du calage angulaire d'une aube (10) d'hélice, pour une turbomachine d'aéronef, qui comprend :
- un bol (58) comportant une paroi annulaire (58a) s'étendant autour d'un axe (A) destiné à être un axe de calage de l'aube, cette paroi annulaire (58a) comportant une extrémité axiale inférieure fermée par une paroi de fond (58b), et une extrémité axiale supérieure ouverte et configurée pour autoriser le montage d'un pied (14) de l'aube (10) à l'intérieur du bol (58), la paroi de fond (58b) étant configurée pour coopérer par complémentarité de formes avec une extrémité libre (28) dudit pied (14) de façon à ce que le bol (58) soit solidarisé en rotation avec le pied (14) autour dudit axe (A), le système de commande du calage angulaire d'une aube étant **caractérisé par**:
- une bague d'immobilisation (152) qui s'étend autour dudit axe (A) et qui est configurée pour être montée autour du pied (14), cette bague d'immobilisation (152) étant configurée pour être montée à l'intérieur du bol (58) et pour coopérer respectivement avec le pied (14) et la paroi annulaire (58a) du bol (58) afin d'assurer la rétention axiale du pied (14) dans le bol (58),
la bague d'immobilisation (152) étant une bague à double crabotage qui comporte deux rangées annulaires de dents externes (154, 156) de crabot, une première de ces rangées de dents (154, 156) étant configurée pour coopérer par crabotage avec des premières dents internes (158, 160) de crabot complémentaires de la paroi annulaire (58a) du bol (58) et par appui axial (G) avec ces dents pour assurer la rétention du pied (14) dans le bol (58), et une seconde de ces rangées de dents (156, 154) étant configurée pour coopérer par crabotage avec des secondes dents internes (160, 158) de crabot complémentaires de la paroi annulaire (58a) du bol (58) et étant espacée de ces dents par un jeu axial (J) pour assurer une sécurité en cas de défaillance de la première rangée de dents.

2. Système (34) selon la revendication 1, dans lequel la première rangée de dents (154) est une rangée de dents supérieure destinée à être située du côté de la pale (12) de l'aube (10), et la seconde rangée de dents (156) est une rangée de dents inférieure.

3. Système (34) selon la revendication 1, dans lequel la seconde rangée de dents (154) est une rangée de dents supérieure destinée à être située du côté de la pale de l'aube, et la première rangée de dents (156) est une rangée de dents inférieure.

4. Système (34) selon l'une des revendications précédentes, dans lequel les première et seconde rangées de dents (154, 156) sont espacées axialement l'une de l'autre d'un espace (E) qui est destiné à accueillir lesdites premières ou secondes dents internes (158, 160) et qui a une dimension axiale (E1) supérieure à une épaisseur axiale de ces dents internes.

5. Système (34) selon l'une des revendications précédentes, dans lequel les dents de la première rangée de dents (154, 156) ont une épaisseur axiale (E2, E3) supérieure à celle des dents de la seconde rangée de dents.

6. Système (34) selon l'une des revendications précédentes, dans lequel les première et seconde rangées de dents (154, 156) ont sensiblement un même diamètre interne (Dint) et un même diamètre externe (Dext).

7. Système (34) selon l'une des revendications précédentes, dans lequel la bague d'immobilisation (152) comprend une surface cylindrique interne (152a) à sa périphérie interne, cette surface cylindrique interne (152a) étant configurée pour coopérer par glissement avec une surface cylindrique externe (46a) complémentaire du pied (14) de l'aube (10) ou d'un élément rapporté sur ce pied lors du double crabotage, et cette surface cylindrique interne étant située à l'intérieur de la première rangée de dents (154, 156) voire également de la seconde rangée de dents.

8. Système (34) selon la revendication précédente, dans lequel la surface cylindrique interne (152a) a une dimension axiale qui est comprise entre 90% et 100% d'une épaisseur axiale (E2, E3) des dents de la première rangée de dents (154, 156) ou d'une épaisseur axiale maximale de la bague d'immobilisation.

9. Système (34) selon l'une des revendications précédentes, dans lequel il comprend en outre :
- un palier de guidage à roulement inférieur (54) s'étendant autour dudit axe (A) et monté autour d'une partie inférieure de la paroi annulaire (58a),
- un palier de guidage à roulement supérieur (56) s'étendant autour dudit axe (A) et monté autour d'une partie supérieure de la paroi annulaire (58a).

10. Système (34) selon la revendication précédente, dans lequel au moins l'un des paliers de guidage (54, 56) a sa bague interne (54a, 56a) qui est intégrée audit bol (58).

11. Système (34) selon la revendication 9 ou 10, dans lequel la partie supérieure de la paroi annulaire (58a) autour de laquelle est monté le palier (56) supérieur comprend lesdites premières et secondes dents (158, 160) à sa périphérie interne et un filetage à sa périphérie externe, un écrou (78) étant vissé sur ce filetage et prenant appui axialement sur une bague externe (56a) de ce palier (56).

12. Système (34) selon l'une des revendications précédentes, dans lequel il comprend en outre un anneau de verrouillage (92) et un jonc annulaire (100), l'anneau de verrouillage (92) étant configuré pour être engagé axialement entre les dents internes (82) et externes (84) de crabot pour empêcher la rotation de la bague (152) de crabotage à l'intérieur du bol (58), et le jonc annulaire (100) étant monté dans le bol (58) pour bloquer axialement l'anneau de verrouillage (92) dans le bol (58).

13. Ensemble comportant un système (34) selon l'une des revendications précédentes et une aube (10) d'hélice à calage variable, cette aube (10) comportant une pale (12) reliée à un pied (14), le pied (14) comportant un corps (24) logé dans un fût annulaire (26) qui s'étend autour d'un axe (A) de calage de l'aube.

14. Turbomachine, en particulier d'aéronef, comportant au moins un système (34) selon l'une des revendications 1 à 12 ou un ensemble selon la revendication 13.

15. Procédé de montage d'un système selon l'une des revendications 1 à 12, dans lequel il comprend les étapes de :
a) insertion du pied (14) de l'aube (10) à l'intérieur du bol (58) du système (34), par déplacement de l'aube (10) dans une direction parallèle à l'axe de calage (A),
b) engagement de l'extrémité libre (28) du pied (14) dans l'évidement (60) de la paroi de fond (58b) du bol (58) de façon à solidariser en rotation le bol (58) avec le pied (14) de l'aube (10), et
c) engagement de la bague d'immobilisation (152), préalablement montée ou présente autour du pied (14) de l'aube (10), dans le bol (58) et montage de cette bague (152) par double crabotage dans le bol (58) et sur le pied (14) de l'aube (10) de façon à assurer la rétention axiale du pied (14) dans le bol (58).

## Patentansprüche

1. System (34) zum Steuern der Winkelfeststellposition einer Schaufel (10) eines Propellers, für ein Turbotriebwerk eines Luftfahrzeugs, welches umfasst:
- eine Schale (58), die eine ringförmige Wand (58a) umfasst, die sich um eine Achse (A) herum erstreckt, die dazu bestimmt ist, eine Feststellpositionachse für die Schaufel zu sein, wobei diese ringförmige Wand (58a) ein unteres axiales Ende umfasst, das durch eine Bodenwand (58b) geschlossen wird, und ein oberes axiales Ende, das offen und konfiguriert ist, um die Montage eines Fußes (14) der Schaufel (10) im Inneren der Schale (58) zu ermöglichen, wobei die Bodenwand (58b) konfiguriert ist, um durch Formschlüssigkeit mit einem freien Ende (28) des Fußes (14) zusammenzuwirken, sodass die Schale (58) um die Achse (A) herum drehfest mit dem Fuß (14) verbunden ist, wobei das System zum Steuern der Winkelfeststellposition **gekennzeichnet ist durch**:
- einen Sperrring (152), der sich um die Achse (A) herum erstreckt, und der konfiguriert ist, um um den Fuß (14) herum montiert zu werden, wobei dieser Sperrring (152) konfiguriert ist, um im Inneren der Schale (58) montiert zu werden, und um jeweils mit dem Fuß (14) und der ringförmigen Wand (58a) der Schale (58) zusammenzuwirken, um die axiale Rückhaltung des Fußes (14) in der Schale (58) zu gewährleisten.
wobei der Sperrring (152) ein Ring mit doppelter Klauenkupplung ist, die zwei ringförmige Reihen von äußeren Klauenkupplungszähnen (154, 156) umfasst, wobei eine erste dieser Reihen von Zähnen (154, 156) konfiguriert ist, um **durch** Klauenkupplung mit ersten inneren Klauenkupplungszähnen (158, 160), die komplementär zur ringförmigen Wand (58a) der Schale (58) sind, und **durch** axiales Aufliegen (G) mit diesen Zähnen zusammenzuwirken, um die Rückhaltung des Fußes (14) in der Schale (58) zu gewährleisten, und wobei eine zweite dieser Reihen von Zähnen (156, 154) konfiguriert ist, um **durch** Klauenkupplung mit zweiten inneren Klauenkupplungszähnen (160, 158) zusammenzuwirken, die komplementär zur ringförmigen Wand (58a) der Schale (58) sind, und von diesen Zähnen **durch** ein axiales Spiel (J) beabstandet sind, um eine Sicherheit im Falle eines Ausfalls der ersten Reihe von Zähnen zu gewährleisten.

2. System (34) nach Anspruch 1, wobei die erste Reihe von Zähnen (154) eine obere Reihe von Zähnen ist, die dazu bestimmt ist, sich auf der Seite des Schaufelblatts (12) der Schaufel (10) zu befinden, und die zweite Reihe von Zähnen (156) eine untere Reihe von Zähnen ist.

3. System (34) nach Anspruch 1, wobei die zweite Reihe von Zähnen (154) eine obere Reihe von Zähnen ist, die dazu bestimmt ist, sich auf der Seite des Schaufelsblatts der Schaufel zu befinden, und die erste Reihe von Zähnen (156) eine untere Reihe von Zähnen ist.

4. System (34) nach einem der vorstehenden Ansprüche, wobei die erste und die zweite Reihe von Zähnen (154, 156) axial um einen Spalt (E) voneinander bestandet sind, der dazu bestimmt ist, die ersten oder zweiten inneren Zähne (158, 160) aufzunehmen und der eine axiale Abmessung (E1) aufweist, die größer ist als eine axiale Dicke dieser inneren Zähne.

5. System (34) nach einem der vorstehenden Ansprüche, wobei die Zähne der ersten Reihe von Zähnen (154, 156) eine axiale Dicke (E2, E3) aufweisen, die größer ist als jene der Zähne der zweiten Reihe von Zähnen.

6. System (34) nach einem der vorstehenden Ansprüche, wobei die erste und die zweite Reihe von Zähnen (154, 156) im Wesentlichen einen gleichen Innendurchmesser (Dint) und einen gleichen Außendurchmesser (Dext) aufweisen.

7. System (34) nach einem der vorstehenden Ansprüche, wobei der Sperrring (152) eine zylindrische Innenfläche (152a) an seinem Innenumfang umfasst, wobei diese zylindrische Innenfläche (152a) konfiguriert ist, um durch Gleiten mit einer zylindrischen Außenfläche (46a), die zum Fuß (14) der Schaufel (10) oder zu einem an diesem Fuß angebrachten Element komplementär ist, bei der doppelten Klauenkupplung zusammenzuwirken, und wobei sich diese zylindrische Innenfläche im Inneren der ersten Reihe von Zähnen (154, 156), sogar ebenfalls der zweiten Reihe von Zähnen befindet.

8. System (34) nach dem vorstehenden Anspruch, wobei die zylindrische Innenfläche (152a) eine axiale Abmessung aufweist, die zwischen 90% und 100% einer axialen Dicke (E2, E3) der Zähne der ersten Reihe von Zähnen (154, 156) oder einer maximalen axialen Dicke des Sperrrings beträgt.

9. System (34) nach einem der vorstehenden Ansprüche, wobei es weiter umfasst:
- eine Führungslagerung mit unterer Laufrolle (54), die sich um die Achse (A) herum erstreckt und um einen unteren Teil der ringförmigen Wand (58a) herum montiert ist,
- eine Führungslagerung mit oberer Laufrolle (56), die sich um die Achse (A) herum erstreckt und um einen oberen Teil der ringförmigen Wand (58a) herum montiert ist.

10. System (34) nach dem vorstehenden Anspruch, wobei mindestens die eine der Führungslagerungen (54, 56) ihren Innenring (54a, 56a) aufweist, der in die Schale (58) integriert ist.

11. System (34) nach Anspruch 9 oder 10, wobei der obere Teil der ringförmigen Wand (58), um den herum die obere Lagerung (56) montiert ist, die ersten und die zweiten Zähne (158, 160) an seinem Innenumfang und ein Gewinde an seinem Außenumfang umfasst, wobei eine Schraubenmutter (78) auf diesem Gewinde aufgeschraubt ist und auf einem Außenring (56a) dieser Lagerung (56) axial aufliegt.

12. System (34) nach einem der vorstehenden Ansprüche, wobei er weiter einen Verriegelungsringanker (92) und einen ringförmigen Reif (100) umfasst, wobei der Verriegelungsringanker (92) konfiguriert ist, um axial zwischen die inneren (82) und äußeren (84) Klauenkupplungszähne eingeführt zu werden, um die Drehung des Klauenkupplungsringes (52) im Inneren der Schale (58) zu verhindern, und der ringförmige Reif (100) in der Schale (58) montiert ist, um den Verriegelungsringanker (92) in der Schale (58) axial zu blockieren.

13. Baugruppe, die ein System (34) nach einem der vorstehenden Ansprüche und eine Schaufel (10) eines Propellers mit variabler Feststellposition umfasst, wobei diese Schaufel (10) ein Schaufelblatt (12) umfasst, das mit einem Fuß (14) verbunden ist, der Fuß (14) einen Körper (24) umfasst, der in einer ringförmigen Hülse (26) untergebracht ist, die sich um eine Achse (A) für die Schaufelfeststellposition herum erstreckt.

14. Turbotriebwerk, insbesondere eines Luftfahrzeugs, das mindestens ein System (34) nach einem der Ansprüche 1 bis 12 oder eine Baugruppe nach Anspruch 13 umfasst.

15. Verfahren zum Montieren eines Systems nach einem der Ansprüche 1 bis 12, wobei es die Schritte umfasst zum:
a) Einfügen des Fußes (14) der Schaufel (10) ins Innere der Schale (58) des Systems (34), durch Verschieben der Schaufel (10) in einer Richtung parallel zur Feststellpositionachse (A),
b) Einführen des freien Endes (28) des Fußes (14) in die Aussparung (60) der Bodenwand (58b) der Schale (58), um die Schale (58) drehfest mit dem Fuß (14) der Schaufel (10) zu verbinden, und
c) Einführen des Sperrrings (152), der zuvor um den Fuß (14) der Schaufel (10) herum montiert wurde oder dort vorhanden ist, in die Schale (58) und Montieren dieses Ringes (152) in der Schale (58) und auf dem Fuß (14) der Schaufel (10) durch doppelte Klauenkupplung, um die axiale Rückhaltung des Fußes (14) in der Schale (58) zu gewährleisten.

## Claims

1. A system (34) for controlling the pitch of a propeller vane (10) for an aircraft turbine engine, which comprises:
- a cup (58) comprising an annular wall (58a) extending about an axis (A) intended to be a pitch setting axis of the vane, this annular wall (58a) comprising a lower axial end enclosed by a bottom wall (58b) and an upper axial end that is open and configured to allow a root (14) of the vane (10) to be mounted inside the cup (58), the bottom wall (58b) being configured to cooperate in a form-fitting manner with a free end (28) of said root (14) so that the cup (58) is secured in rotation to the root (14) about said axis (A),
the system for controlling the pitch of a propeller vane (10) being chartacterized in that:
- an immobilisation ring (152) extending about said axis (A) and configured to be mounted about the root (14), this immobilisation ring (152) being configured to be mounted within the cup (58) and to cooperate with the root (14) and the annular wall (58a) of the cup (58), respectively, in order to ensure the axial retention of the root (14) within the cup (58),
the immobilisation ring (152) being a double dog clutch ring which comprises two annular rows of external dog teeth (154, 156), a first of these rows of teeth (154, 156) being configured to cooperate by dog clutch with complementary first internal dog teeth (158, 160) of the annular wall (58a) of the cup (58) and by axial support (G) with these teeth to ensure the retention of the root (14) in the cup (58) and a second of these rows of teeth (156, 154) being configured to cooperate by dog clutch with complementary second internal dog teeth (160, 158) of the annular wall (58a) of the cup (58) and being spaced from these teeth by an axial clearance (J) to ensure a safety in the event of failure of the first row of teeth.

2. The system (34) of claim 1, wherein the first row of teeth (154) is an upper row of teeth intended to be located on the side of the blade (12) of the vane (10), and the second row of teeth (156) is a lower row of teeth.

3. The system (34) of claim 1, wherein the second row of teeth (154) is an upper row of teeth intended to be located on the side of the blade of the vane, and the first row of teeth (156) is a lower row of teeth.

4. The system (34) according to any of the preceding claims, wherein the first and second rows of teeth (154, 156) are axially spaced from each other by a space (E) which is intended to accommodate said first or second internal teeth (158, 160) and which has an axial dimension (E1) greater than an axial thickness of those internal teeth.

5. The system (34) according to any of the preceding claims, wherein the teeth of the first row of teeth (154, 156) have a greater axial thickness (E2, E3) than that of the teeth of the second row of teeth.

6. The system (34) according to any of the preceding claims, wherein the first and second rows of teeth (154, 156) have substantially a same internal diameter (Dint) and a same external diameter (Dext).

7. The system (34) according to any of the preceding claims, wherein the immobilisation ring (152) comprises an internal cylindrical surface (152a) at its internal periphery, this internal cylindrical surface (152a) being configured to cooperate by sliding with an external cylindrical surface (46a) complementary of the root (14) of the vane (10) or of an element fitted to this root during the double dog clutch, and this internal cylindrical surface being located within the first row of teeth (154, 156) or even within the second row of teeth.

8. The system (34) according to the preceding claim, wherein the internal cylindrical surface (152a) has an axial dimension which is between 90% and 100% of an axial thickness (E2, E3) of the teeth of the first row of teeth (154, 156) or a maximum axial thickness of the immobilisation ring.

9. The system (34) according to any of the preceding claims, wherein it further comprises:
- a lower rolling guide bearing (54) extending around said axis (A) and mounted around a lower portion of the annular wall (58a),
- an upper rolling guide bearing (56) extending around said axis (A) and mounted around an upper portion of the annular wall (58a).

10. The system (34) according to the preceding claim, wherein at least one of the guide bearings (54, 56) has its internal ring (54a, 56a) integrated with said cup (58).

11. The system (34) according to claim 9 or 10, wherein the upper portion of the annular wall (58a) around which the upper bearing (56) is mounted comprises said first and second teeth (158, 160) at its internal periphery and a thread at its external periphery, a nut (78) being screwed onto this thread and being supported axially on an external ring (56a) of this bearing (56).

12. The system (34) according to any of the preceding claims, wherein it further comprises a locking annulus (92) and an annular snap ring (100), the locking annulus (92) being configured to be axially engaged between the internal (82) and external (84) dog teeth to prevent the rotation of the dog clutch ring (152) within the cup (58), and the annular snap ring (100) being mounted in the cup (58) to axially block the locking annulus (92) in the cup (58).

13. An assembly comprising a system (34) according to one of the preceding claims and a variable pitch propeller vane (10), this vane (10) comprising a blade (12) connected to a root (14), the root (14) comprising a body (24) housed in an annular barrel (26) which extends around a pitch setting axis (A) of the vane.

14. A turbine engine, in particular for an aircraft, comprising at least one system (34) according to any of claims 1 to 12 or an assembly according to claim 13.

15. A method for mounting a system according to any of claims 1 to 12, wherein it comprises the steps of:
a) inserting the root (14) of the vane (10) within the cup (58) of the system (34) by displacing the vane (10) in a direction parallel to the pitch setting axis (A),
b) engaging the free end (28) of the root (14) in the recess (60) of the bottom wall (58b) of the cup (58) so as to secure in rotation the cup (58) to the root (14) of the vane (10), and
c) engaging the immobilisation ring (152), previously mounted or present around the root (14) of the vane (10), in the cup (58) and mounting this ring (152) by double dog clutch in the cup (58) and on the root (14) of the vane (10) so as to ensure the axial retention of the root (14) in the cup (58).
